Europäisches Patentamt

(19) European Patent Office

Office européen des brevets

(11) Publication number: **0 078 868**
**B1**

(12) **EUROPEAN PATENT SPECIFICATION**

(45) Date of publication of patent specification: **19.02.86**

(21) Application number: **81305299.0**

(22) Date of filing: **06.11.81**

(51) Int. Cl.⁴: **H 05 B 43/02, G 03 B 15/04**

(54) **Photographic flash lamp array.**

(43) Date of publication of application:
**18.05.83 Bulletin 83/20**

(45) Publication of the grant of the patent:
**19.02.86 Bulletin 86/08**

(84) Designated Contracting States:
**DE FR GB IT NL**

(56) References cited:
**US-A-3 728 068**
**US-A-3 728 947**
**US-A-3 898 512**
**US-A-3 930 184**

(73) Proprietor: **POLAROID CORPORATION**
**549 Technology Square**
**Cambridge, Massachusetts 02139 (US)**

(72) Inventor: **Johnson, Bruce Kean**
**27 Summer Street**
**Andover Massachusetts (US)**

(74) Representative: **Abbott, Leonard Charles et al**
**GILL JENNINGS & EVERY 53-64 Chancery Lane**
**London WC2A 1HN (GB)**

Courier Press, Leamington Spa, England.

## Description

Cameras provided with an accessory socket in the shutter and lens housing which accept a connector blade of a multi-flash lamp array are well known. The lamp array usually includes five flash lamps arranged in one side of the array and five flash lamps arranged in the other side of the array so that five sequential exposures can be made, each with a different bulb, when the array is inserted in the socket in either position. The remaining five lamps may be used by reversing the flash array to face in the opposite direction.

The cameras are provided with flash fire sequencing circuits to select an unfired bulb in sequence for each successive photographic exposure cycle. Since the sequencing circuit need only sequentially fire five flash lamps in a row, it is provided with five flash fire circuits for the five flash lamps on either side of the lamp array. (See e.g. US—A—3930184, US—A—3898512 and US—A—3728947)

Since the array requires withdrawal from the camera socket, turning and reinsertion after the firing of the first five flash lamps to connect the second set of five lamps, it is desirable to have all ten lamps mounted in one side of the flash lamp array to avoid the necessity and inconvenience of reversing the flash array after half of the bulbs are expended. This would require rearranging the flash bulbs in the array and necessitate re-designing the flash fire sequencing circuit to provide additional flash firing circuits to accommodate the additional flash lamps on one side of the flash array. Such redesign would be expensive and would not permit the use of the new ten flash lamp arrays with cameras having five flash fire circuits only. Rather, it is desirable to maintain the existing sequencing circuit with its five flash fire control circuits, and to adapt a new ten flash-lamp array to be sequentially fired by the five flash fire control circuits.

A multi-lamp photoflash array according to the present invention, for use with a camera of the type having means for providing a flash fire signal at one of a plurality of flash fire terminals and wherein the flash fire signal is normally sequentially advanced from one terminal to another in correspondance with each exposure cycle, comprises:

a plurality of flash lamps;

connector means for receiving the flash fire signal from the camera flash fire signal means and for directing the flash fire signal from the flash fire terminals to respective flash lamps, the connector means comprising a plurality of spaced apart terminal elements arranged for complementary connection with respect to the camera flash fire terminals and a plurality of conductive leads for interconnecting the photoflash terminal elements with flash lamps;

and is characterized in that each flash fire terminal is associated with a respective pair of flash lamps and further characterized by common lead means for providing a common connection from the photoflash array back to the camera, the common lead means comprising a common lead conductor and another terminal, the common lead conductor connecting directly to a first one of the lamps in each of the pairs of flash lamps and to the said other terminal; and

switch means responsive to the firing of the first one of the flash lamps in each of the flash lamp pairs for connecting to the common lead means, the second one of the flash lamps in the same flash lamp pair and the second one of the flash lamps in the immediately preceding flash lamp pair in the flash fire sequence; so as to enable the subsequent firing of the second one of the flash lamps in the preceding pair of flash lamps during the next exposure cycle in the event that the first one of the flash lamps or its associated switch means in the preceding flash lamp pair did not operate during the preceding exposure cycle.

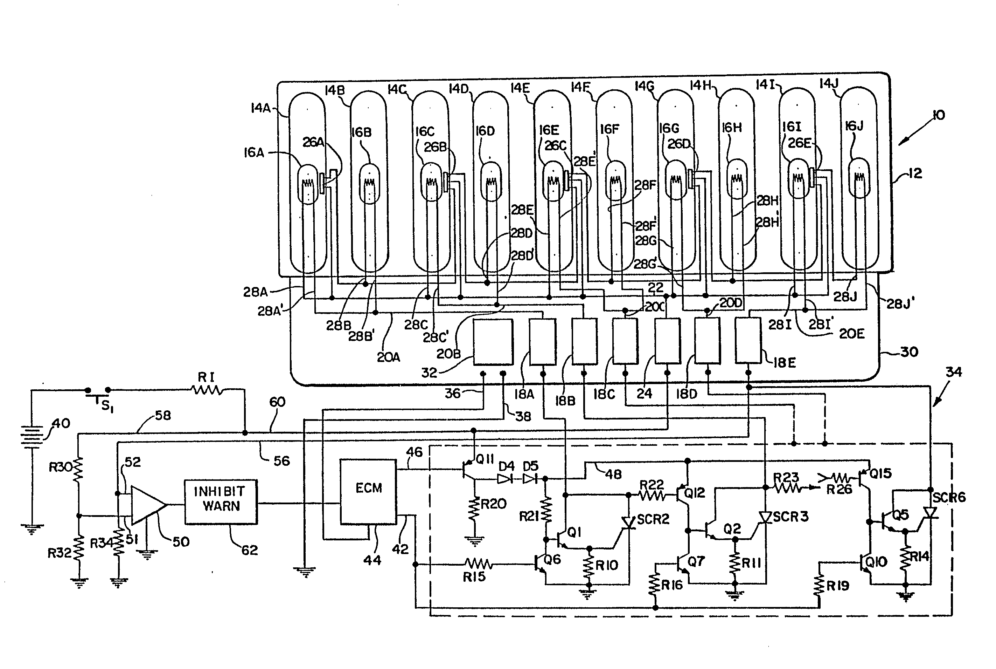

In order that the invention may be better understood, one embodiment of the invention will now be described with reference to the accompanying drawing, which is a schematic circuit diagram for a multi-flash lamp array and an associated camera flash fire sequencing circuit.

Referring to the drawing, there is shown generally at 10 the multi-flash lamp array of this invention which may comprise an insulating section 12 supporting ten reflectors 14A—14J comprising reflective recesses in which ten flash lamps 16A—16J are respectively mounted. Each of the flash lamps 16A—16J includes a pair of leads extending therefrom as shown at 28A—28J and 28A'—28J', respectively.

The flash lamps 16A—16J are connected in pairs with one lead, 28A', 28C', 28E', 28G' and 28I' from the respective first flash lamp of each pair being in common connection with a lead 28B', 28D', 28F', 28H' and 28J' from the second flash lamp of that pair. The flash lamp array 10 also includes a connector blade 30 depending from the insulating support section 12 and including a plurality of spaced apart terminal elements 24, 32, and 18A—18E. Each of the terminal elements 18A—18E connects, respectively, to the common leads 20A—20E of the flash lamp pairs.

A common terminal element 24 is provided and connected to the leads 28A, 28C, 28E, 28G, and 28I of the first bulb of each pair by way of a common conductor 22.

A flash actuated switch or fuse 26A—26E is stationed in close spaced-apart relation to each of the first flash lamps 16A, 16C, 16E, 16G and 16I of each pair. The switches 26A—26E may be heat responsive and may be provided with electrical contacts biased toward each other but held apart by a material which melts or deforms under the influence of the heat generated when a lamp is flashed to permit the contacts to close. Alternatively, the heat responsive material may be a material bridged between, or encapsulating, a pair of spaced apart terminals which is an insulator but becomes electrically conductive when heated by the associated flashing lamp. The flash actuated switches 26A—26E may also comprise light actuated switches of the type described in US—A—3,728,068. Thus, the flash actuated switches 26A—26E may be of any conventional type switch which is normally non-conductive and which responds to the ignition of the respective flash lamp by becoming conductive.

The first flash actuated switch 26A operates to connect the lead 28B of the second flash lamp 16B of the first pair to the common conductor 22. The second flash actuated switch 26B operates to connect the lead 28D of the second lamp 16D of the second pair of lamps to the common line 22. Furthermore, the flash actuated switch 26B operates to connect the lead 28B of the second lamp 16B of the first pair of flash lamps to the common line 22. In like manner, the flash actuated switch 26C operates to connect the other lead 28F from the second lamp 16F of the third pair to the common lead 22 while simultaneously connecting the other lead 28D of the second lamp 16D of the second pair to the common line 22. The remaining flash actuated switches 26D—26E operate in like manner simultaneously to connect the other lead of the second flash lamp of the same pair of lamps along with the other lead of the second flash lamps in the preceding pair of flash lamps to the common line 22.

The connector blade 30 may be inserted into the receiving socket of a camera to connect with corresponding conductors from a typical flash fire sequencing circuit as shown generally at 34 which is disposed within the camera. The terminal element 32 on the connector blade 30 is wide to bridge a pair of conductors 36 and 38 in the flash sequencing circuit 34 thereby readying the flash sequencing circuit.

The flash sequencing circuit 34 comprises five electronic switches. Of these, only three are shown, namely silicon controlled rectifiers SCR2, SCR3, and SCR6. The stage comprising the switch SCR3 is typical of the two stages between SCR3 and SCR6, which have not been shown.

The anode terminals of the silicon controlled rectifiers SCR2—SCR6 connect, respectively, to the terminal elements 18A—18E when the array 10 is received in the camera socket. All the cathode terminals of the silicon controlled rectifiers connect to ground. The gates of the silicon controlled rectifiers SCR2—SCR6 connect to ground through a different one of a set of resistors R10—R14 (only the resistors R10, R11 and R14 are shown). Each of the controlled rectifiers SCR2—SCR6 has its anode connected to the collector of a different NPN transistor Q1—Q5. The emitter of each transistor Q1—Q5 is connected to the gate of a different one of the silicon controlled rectifiers SCR2—SCR6. The base of each transistor Q1—Q5 is connected to the collector of a different one of five inhibit NPN transistors Q6—Q10. The emitter of each of the transistors Q6—Q10 is grounded with respect to a battery 40. The base terminals of transistors Q6—Q10 are each connected through a different one of a series of current distributing resistors R15—R19 to an output terminal 42 of an electronic control module 44. When the electronic control module 44 provides a positive voltage signal corresponding to a logic 1 at output terminal line 42, each of the transistors Q6—Q10 is gated into conduction thereby preventing any of the transistors Q1—Q5 from being biased in conduction. The electronic control module 44 also provides a trigger signal at output terminal line 46 to the base of a PNP transistor Q11. The emitter terminal of transistor Q11 is connected to the positive voltage side of the battery 40 by way of a resistor R1 and a photographic cycle actuator button S1. Thus, the emitter terminal of transistor Q11 receives a positive potential from the battery 40 when the button S1 is depressed. The collector of the transistor Q11 is returned to ground through a resistor R20. The collector of transistor Q11 also connects to a lead 48 through a pair of diodes D4 and D5 in series.

The lead 48 is connected to the base terminal of the transistor Q1 through a resistor R21. The lead 48 is also connected to the emitters of a group of four logic PNP transistors Q12—Q15, (only Q12 and Q15 are shown). The collectors of the transistors Q12—Q15 are connected to the bases of the transistors Q2—Q5, respectively.

The base of the transistor Q12 is connected to the anode of the silicon controlled rectifier SCR2 through a resistor R22. A similar resistor R23 connects the anode of the silicon controlled rectifier SCR3 to the next stage transistor Q13, now shown. Further stages are similarly connected.

The flash sequencing circuit 34 fires each flash lamp in a sequence advancing from first to last. This is accomplished by having each switching circuit receive a trigger signal only when the preceding flash lamp is open circuited. Assuming that none of the flash lamps have been fired and that the flash sequencing circuit 34 is triggered by the electronic control module 44, in response to depression of the actuator button S1, the trigger signal provides a zero or negative potential signal at output line 42 to maintain the inhibit transistors Q6—Q10 in a non-conducting state while a negative-going pulse is provided by the output terminal line 46 to gate transistor Q11 into conduction. Turning on transistor Q11 operates to render gate control transistor Q1 conductive to switch on SCR2 thereby coupling the first lamp 16A across the battery 40 to fire the lamp. As the lamp 16A is supplied with current and begins to flash, SCR3 will not turn on because its gate control transistor Q2 remains non-conductive because its associated logic transistor Q12 is not rendered conductive. That is, the voltage across the emitter base junction of the transistor Q12 is substantially identical to the voltage across the flash lamp 16A and the latter voltage is low as the initial filament resistance is also low. However, as the lamp filament heats up, its resistance increases (just prior to opening of the filament) and the voltage across the lamp increases accordingly. The electronic control module 44 operates to turn on inhibit transistors Q6—Q10 so that subsequent circuits cannot turn on during a later time of the flashing of a preceding lamp. Thus, once firing of a bulb is initiated, a high level in each signal is provided from the flash sequencing circuit for feedback through the electronic control module 44 so that the distributor circuit 34 is clamped off to prevent additional lamps from firing at that time.

Firing the lamp 16A operates to cause the switch 26A to close thereby connecting the lead 28B from the second flash lamp 16B of the first pair to the common lead 22. Thus, after the first flash lamp 16A of the pair is fired, second flash lamp 16B becomes connected in parallel thereto by the switch 26A to that at the next photographic cycle, the SCR2 is triggered as before, now to fire the second lamp 16B of the first pair. Following the firing of the first pair of flash lamps 16A and 16B, when a subsequent trigger signal is received from the electronic control module 44, the first SCR2 is conductive and the voltage across the first pair of open lamps 16A and 16B is high so that the voltage across the transistor Q12 exceeds the threshold necessary to turn on this transistor. The latter, in turn, provides a suitable gating signal to the second SCR3 through gate transistor Q8 to draw ignition current through the first lamp 16C of the second pair of lamps. However, during the initiation of current through the lamp 16C, the following SCRs are not turned on as the transistor Q13 (not shown) is in parallel with the conducting line, and hence, is not biased into conduction.

The firing of the flash lamp 16C operates to close the flash responsive switch 26B thereby connecting the lead 28D of the second flash lamp 16D of the second pair to the common line 22 while at the same time connecting the lead 28B of the second flash lamp 16B of the previously fired pair of flash lamps to the common terminal 22. Since lamp 16B may be expected to have been fired during the photographic cycle preceding the firing of lamp 16C, the connection of lead 28B to the common lead 22 by way of the flash responsive switch 26B has no effect on the order in which the flash lamps are fired. Therefore, the fourth photographic cycle would normally operate to effect the firing of lamp 16D by way of the silicon controlled rectifier SCR3 since the lamps 16A, 16B and 16C have already fired in the normal manner and are, thus, open circuited.

In the event, however, that the first flash lamp 16A is defective and does not ignite, the flash actuated switch 26A is not actuated to connect the lead 28B of the second flash lamp 16B of the first pair of flash lamps to the common lead 22. If the flash actuated switch 26A is defective it may fail to connect the lead 28B in the foregoing manner even if the first flash lamp 16A is not defective. In either case, a subsequent exposure operation which would have operated to fire the second flash lamp 16B in the first pair in the manner described instead operates to fire the first flash lamp 16C in the second pair. This occurs because the high impedance condition of the first pair of flash lamps 16A and 16B between terminals 18A and 24 presents a sufficiently high voltage across transistor Q12 to gate the SCR3 into conduction and draw ignition current through the first flash lamp 16C of the second pair. Therefore, even if the second flash lamp 16B of the first flash lamp pair is operative, it would be bypassed and the photographer would not only lose the first defective flash lamp 16A, but also its associated second flash lamp 16B.

The flash actuated switch 26B, however, precludes the loss of flash lamp 16B by operating to connect the lead 28B to the common line 22. In this manner, the flash lamp 16B is connected across the terminals 18A and 24 upon the firing of the first flash lamp 16C of the second pair regardless of whether the first flash lamp 16A of the first pair fires the switch 26A is defective. Thus, the next photographic exposure cycle after the flash lamp 16C is fired operates to fire the second flash lamp 16B of the first pair as the low impedance provided across the terminals 18A and 24 operates to preclude the gating on of transistor Q12. After the firing of the second flash lamp 16B of the first pair, the next exposure cycle operates in the aforementioned manner to provide an ignition current to the second flash lamp 16D of the second flash lamp pair since the first and second flash lamps 16A and 16B of the first pair provide a high impedance that enables a high voltage across transistor Q12 to gate it on, and thereby provide an ignition current by way of SCR3 through the second flash lamp 16D of the second flash lamp pair.

Each of the flash actuated switches 26B—26E provides a redundancy by operating to connect the second flash lamp in any previous flash lamp pair to the common conductor 22. Thus, should the first flash lamp of any pair or its associated flash responsive switch to defective and fail to connect the second flash lamp of that pair to the common line 22, the first flash lamp in the next succeeding pair of flash lamps operates to connect the second flash lamp of the preceding pair to the common line 22. Thus, if the first flash lamp or its associated flash responsive switch in any of the flash lamp pairs (is defective) other than the first flash lamp in the last pair of flash lamps, the second flash lamp in that pair will not be lost but will be fired as a result of the redundant feature of the flash actuated switches 26A—26D.

There may also be included a detector arrangement for examining the impedance of the last flash lamp 16J which is scheduled to be fired in the flash array 10. The detector arrangement embodies a differential type operational amplifier 50 having a pair of input terminals 52 and 51. Input terminal 52 connects directly to the terminal strip 18E by way of interconnecting line 56 and is also grounded by way of a resistor R34. Input terminal 51 connects to the junction between a pair of resistors R30 and R32. The other side of resistor R32 is grounded while the other side of resistor R30 connects to the terminal 24 by way of interconnecting lines 58 and 60. Since terminals 18E and 24 connect to the last flash lamp scheduled to be fired, the resistance value of resistor R30 is selected to correspond with the predetermined impedance evidenced by a fully expended flash lamp (at least 75 ohms). Resistors R32 and R34 are configured to have substantially the same resistive values to define a voltage comparison network, the output of which at terminals 52 and 51 is amplified by the amplifier 50. The amplifier 50 is also coupled to the positive and negative terminals of battery 40 by means not shown. The output of amplifier 50, in turn, is connected to an inhibit and warn network 62 which may operate to provide both a warning signal to the user and an inhibit signal to the ECM 44 when the last flash lamp is expended. Thus, when a flash assembly with an operative last flash lamp is inserted within the socket, the output from the amplifier 50 may be considered "low" and the inhibit and warn network 62 allows normal operation of the ECM 44. When the resistance across the terminals 18E and 24 is high when the last flash lamp is expended, the output of amplifier 50 reverts to an opposite level, for instance "high" to inhibit further camera operations.

Since certain changes may be made in the above-described system and apparatus without departing from the scope of the invention herein involved, it is intended that all matter contained in the description thereof or shown in the accompanying drawing shall be interpreted as illustrative and not in a limiting sense.

## Claims

1. A multi-lamp photoflash array for use with a camera of the type having means for providing a flash fire signal at one of a plurality of flash fire terminals wherein the flash fire signal is normally sequentially advanced from one terminal to another in correspondence with each exposure cycle, the flash array comprising:

a plurality of flash lamps (14A—14J);

connector means for receiving the flash fire signal from the camera flash fire signal means and for directing the flash fire signal from the flash fire terminals to respective flash lamps, the connector means comprising a plurality of spaced apart terminal elements (18A—18E) arranged for complementary connection with respect to the camera flash fire terminals and a plurality of conductive leads (28) for interconnecting the photoflash terminal elements with flash lamps;

characterized in that each flash fire terminal is associated with a respective pair of flash lamps and further characterized by common lead means for providing a common connection from the photoflash array back to the camera, the common lead means comprising a common lead conductor (22) and another terminal (24), the common lead conductor connecting directly to a first one of the lamps (e.g. 16C) in each of the pairs of flash lamps and to the said other terminal (24); and

switch means responsive to the firing of the first one of the flash lamps in each of the flash lamp pairs for connecting to the common lead means, the second one (16D) of the flash lamps in the same flash lamp pair and the second one (16B) of the flash lamps in the immediately preceding flash lamp pair in the flash fire sequence so as to enable the subsequent firing of said second one of said flash lamps in said preceding pair of flash lamps during the next exposure cycle in the event that said first one of said flash lamps or its associated switch means in said preceding flash lamp pair did not operate during the preceding exposure cycle.

2. The photoflash array of claim 1 wherein: each flash lamp includes two leads extending therefrom, said connector means operates to connect one of said leads from each of said flash lamps with one of said leads from another of said flash lamps in each of said flash lamp pairs to form a pair of interconnected leads and to connect each of said pairs of interconnected leads with a respective one of said terminals, and said common lead means operates to connect all of the other leads from said first ones of said flash lamps in said flash lamp pairs to said other terminal.

3. The photoflash array of claim 2 wherein said switch means operates in response to the firing of said first one of said flash lamps in each of said flash lamp pairs to connect the other lead from said second one of said flash lamps in said same flash lamp pair to said common lead means while simultaneously connecting the other lead from said second one of said flash lamps in said immediately preceding flash lamp pair in said flash fire sequence to said common lead means.

4. The photoflash array of claim 1 wherein said plurality of flash lamps comprises ten flash lamps and said connector means comprises five terminal elements each connecting a respective pair of said flash lamps.

## Patentansprüche

1. Fotografische Blitzbirnenanordnung zur Benutzung in Verbindung mit einer Kamera, welche Mittel aufweist um ein Blitzzündsignal einem von mehreren Blitzzündanschlüssen zu liefern, wobei das Blitzzündsignal normalerweise von einem Anschluß auf den nächsten gemäß jedem Belichtungszyklus fortgeschaltet wird und wobei die Blitzbirnenanordnung folgende Merkmale umfaßt:

mehrere Blitzbirnen (14A—14J);

Verbindungsmittel, um das Blitzzündsignal von der Kamerablitzzündsignalvorrichtung zu empfangen und das Blitzzündsignal von den Blitzzündanschlüssen nach den jeweiligen Blitzbirnen zu leiten, wobei die Verbindungsmittel eine Mehrzahl von im Abstand zueinander angeordneten Anschlußelementen (18A—18E) aufweisen, die zur komplementären Verbindung mit Bezug auf die Kamerablitzzündanschlüsse angeordnet sind, während mehrere Leitungen (28) die Blitzbirnenanschlüsse mit den Blitzbirnen verbinden;

dadurch gekennzeichnet, daß jeder Blitzzündanschluß jeweils einem Paar von Blitzbirnen zugeordnet ist und weiter gekennzeichnet durch gemeinsame Leitungsmittel, um eine gemeinsame Verbindung von der Blitzbirnenanordnung zurück zur Kamera zu schaffen, wobei die gemeinsamen Leitungsmittel einen gemeinsamen Leiter (22) und einen weiteren Anschluß (24) umfassen und der gemeinsame leiter direkt eine erste Birne (z.B. 16C) in jedem Blitzbirnenpaar und mit dem anderen Anschluß (24) verbindet; und

daß Schaltmittel auf die Zündung der ersten der Blitzlampen eines jeden Blitzlampenpaares anspricht, um mit den gemeinsamen Leitungsmitteln die zweite Blitzbirne (16D) des gleichen Blitzbirnenpaares und mit der zweiten Blitzbirne (16B) des unmittelbar vorhergehenden Blitzlampenpaares der Blitzzündfolge zu verbinden, so daß die aufeinanderfolgende Zündung der zweiten Blitzbirne des vorhergehenden Blitzbirnenpaares während der nächsten Belichtung erfolgt, falls die erste Blitzbirne oder die zugeordneten Schaltmittel in dem vorhergehenden Blitzbirnenpaar während des vorhergehenden Belichtungszyklus nicht funktionierten.

2. Blitzbirnenanordnung nach Anspruch 1, bei welcher: jede Blitzbirne zwei von ihr ausgehende Leitungen aufweist und die Verbindungsmittel eine der Leitungen jeder Blitzbirne mit einer der Leitungen einer anderen Blitzbirne in jedem Blitzbirnenpaar verbindet, um ein Paar miteinander verbundener Leitungen zu schaffen und jedes Paar miteinander verbundener Leitungen mit jeweils einem Anschluß zu verbinden, wobei die gemeinsamen Leitungsmittel alle anderen Leitungen von den ersten Blitzlampen des Blitzlampenpaares mit dem anderen Anschluß verbinden.

3. Blitzbirnenanordnung nach Anspruch 2, bei welcher die Schaltmittel gemäß der Zündung der ersten Blitzlampe jedes Blitzlampenpaares die andere Leitung der zweiten Blitzbirne des gleichen Blitzbirnenpaares mit den gemeinsamen Leitungsmitteln verbindet, während gleichzeitig die andere Leitung der zweiten Blitzbirne des unmittelbar vorausgehenden Blitzbirnenpaares in der Blitzzündfolge mit den gemeinsamen Leitungsmitteln verbunden wird.

4. Blitzbirnenanordnung nach Anspruch 1, bei welchem die Mehrzahl von Blitzbirnen zehn Blitzbirnen umfaßt und die Verbindungsmittel fünf Anschlußelemente aufweisen, die jeweils ein Paar der Blitzbirnen verbinden.

**Revendications**

1. Dispositif de flash photographique à plusieurs lampes devant être utilisé avec un appareil photographique du type possédant des moyens pour délivrer un signal d'allumage de flash sur l'une d'une pluralité de bornes d'allumage de flash dans lequel le signal d'allumage de flash est normalement avancé successivement d'une borne à l'autre en correspondance avec chaque cycle d'exposition, le dispositif de flash comportant:

une pluralité de lampes flash (14A à 14J);

des moyens de connecteur pour recevoir le signal d'allumage de flash des moyens de signal d'allumage de flash de l'appareil photographique et pour diriger le signal d'allumage de flash de bornes d'allumage de flash aux lampes flash respectives, les moyens de connecteur comportant une pluralité d'éléments de borne espacés les uns des autres (18A à 18E) disposés pour une connexion complémentaire avec les bornes d'allumage de flash de l'appareil photographique et une pluralité de fils conducteurs (28) pour interconnecter les éléments de borne de flash photographique avec les lampes flash;

caractérisé en ce que chaque borne d'allumage de flash est associée avec une paire de lampes flash respective et caractérisé de plus par des moyens de fil commun pour fournir une connexion commune retournant du dispositif de flash photographique à l'appareil photographique, les moyens de fil commun comportant un fil conducteur commun (22) et une autre borne (24), le fil conducteur commun étant directement connecté à une première des lampes (par exemple 16C) dans chacune des paires de lampes flash et à ladite autre borne (24); et

des moyens de commutation réagissant à l'allumage de la première des lampes flash dans chacune des paires de lampes flash pour connecter aux moyens de fil commun la deuxième (16D) des lampes flash dans la même paire de lampes flash et la deuxième (16B) des lampes flash dans la paire de lampes flash immédiatement précédente dans la séquence d'allumage des flashs de façon à permettre l'allumage ultérieur de ladite deuxième desdites lampes flash dans ladite paire de lampes flash précédente durant le cycle d'expostion suivant dans le cos où ladite première desdites lampes flash ou ses moyens de commutation associés dans ladite paire de lampes flash précédente n'ont pas fonctionné durant le cycle d'exposition précédent.

2. Le dispositif de flash photographique de la revendication 1, dans lequel: chaque lampe flash comporte deux fils partant de celle-ci, lesdits moyens de connecteur fonctionnent pour connecter l'un desdits fils de chacune desdites lampes flash avec l'un desdits fils d'une autre desdites lampes flash dans chacune desdites paires de lampes flash pour former une paire de fils interconnectés et pour connecter chacune desdites paires de fils interconnectés avec une borne respective desdites bornes, et lesdits moyens de fil commun fonctionnent pour connecter l'ensemble des autres fils desdites premières desdites lampes flash dans lesdites paires de lampes flash à ladite autre borne.

3. Le dispositif de flash photographique de la revendication 2, dans lequel lesdits moyens de commutateurs fonctionnent en réponse à l'allumage de ladite première desdites lampes flash dans chacune desdites paires de lampes flash pour connecter l'autre fil de ladite deuxième desdites lampes flash dans ladite même paire de lampes flash auxdits moyens de fil commun tout en connectant simultanément l'autre fil de ladite deuxième desdites lampes flash dans ladite paire de lampes flash immédiatement précédente dans ladite séquence d'allumage des flashs auxdits moyens de fil commun.

4. Le dispositif de flash photographique de la revendication 1, dans lequel ladite pluralité de lampes flash comporte dix lampes flash et lesdits moyens de connecteur comportent cinq éléments de borne connectés chacun à une paire respective desdites lampes flash.